# FASCICULE DE BREVET EUROPEEN

(11) **EP 1 083 644 B1**
(45) Date de publication et mention de la délivrance du brevet: **04.08.2010**
(21) Numéro de dépôt: 00410096.2
(22) Date de dépôt: 11.08.2000
(51) Int. Cl.: H02H 1/00

(54) **Dispositif de protection terre sensible à des courants d'arc, declencheur et disjoncteur comportant un tel dispositif**
Lichtbogenstromsensitiver Erdfehlerschutz, Auslöser und Schutzschalter mit einer solchen Vorrichtung
Earth fault protection device sensitive to arc currents, trip device and circuit breaker comprising such a device

(30) Priorité: 10.09.1999 FR 9911489
(43) Date de publication de la demande: 14.03.2001
(73) Titulaire: Schneider Electric Industries SAS, 92500 Rueil-Malmaison (FR)
(72) Inventeur: Suptitz, Eric, 38050 Grenoble cedex 09 (FR); Blanchard, Pierre, 38050 Grenoble cedex 09 (FR)
(74) Mandataire: Tripodi, Paul

(56) Documents cités:
- EP-A- 0 802 602
- EP-A- 0 813 281

## Description

L'invention concerne un dispositif de protection terre comportant une entrée pour recevoir un premier signal représentatif d'un courant de défaut à la terre, des premiers moyens de traitement de signal pour traiter un signal représentatif d'un courant de défaut à la terre, et des moyens de traitement de fonctions de protection connectés aux premiers moyens de traitement de signal.

Les dispositifs de protection terre connus installés dans des déclencheurs ou des disjoncteurs comportent des moyens de détection de courants homopolaires ou de défaut terre. Généralement, ces courants sont détectés en faisant la somme vectorielle de l'ensemble des courants de ligne, c'est à dire des courants de phases et du courant de neutre.

Cette somme vectorielle peut être réalisée en mesurant séparément des courants dans chaque conducteur de ligne avec des capteurs indépendants puis un dispositif détermine un signal de courant de défaut terre en effectuant la somme des signaux mesurés. Il est également possible de mesurer un courant de défaut terre en utilisant un capteur qui entoure tous les conducteurs. Un signal fourni par un tel capteur est directement représentatif d'un courant de défaut terre.

Les signaux représentatifs de courant de défaut terre sont utilisés dans des fonctions de protection pour commander l'ouverture de contacts de disjoncteur ou pour signaler la présence de courant de défaut terre.

Dans des dispositifs de protection terre connus, les signaux représentatifs des courants de défaut sont traités pour extraire une valeur efficace desdits signaux. Cependant, lorsque les courants de défaut sont causés par des arcs électriques, la durée desdits courants est très faible. La durée des courants d'arc est souvent très inférieure à la période correspondant à la fréquence d'un réseau de distribution électrique. Ces courants de défaut de faible durée n'ont pas une valeur efficace très élevée mais provoquent des nuisances importantes dans des installations électriques. De plus, ces courants d'arc peuvent présenter un danger pour des personnes qui utilisent du matériel connecté au réseau.

Une détection en valeur efficace ne permet pas de détecter correctement ces courants d'arc. D'autres façon pour détecter des arcs éléctriques sont décrites dans les documents EP0802602 et EP0813281.

Il existe des dispositifs qui utilisent des détections en valeur crête. Ces dispositifs peuvent détecter correctement les courant d'arc mais ils ne sont pas suffisamment précis pour détecter des courants présentant des harmoniques.

L'invention a pour but un dispositif de protection terre permettant une détection améliorée des courants de défaut terre comportant des courants d'arcs électriques, ainsi qu'un déclencheur et un disjoncteur comportant un tel dispositif.

Un dispositif selon l'invention comporte des seconds moyens de traitement de signal pour traiter un signal représentatif d'un courant de défaut à la terre connectés entre ladite entrée et les premiers moyens de traitement de signal, lesdits seconds moyens de traitement de signal fournissant aux premiers moyens de traitement de signal un second signal représentatif d'un courant de défaut à la terre ayant à la décroissance une pente inférieure à une valeur de limitation de pente prédéterminée

Dans un mode de réalisation préférentiel, les seconds moyens de traitement de signal comportent :
- des moyens d'échantillonnage pour échantillonner le premier signal représentatif d'un courant de défaut à la terre,
- des moyens de mémorisation pour mémoriser une dernière valeur du second signal représentatif d'un courant de défaut à la terre,
- des moyens de calcul de décroissance pour calculer une valeur à décroissance limitée connectés aux moyens de mémorisation et à des moyens de fourniture d'une valeur de limitation de pente, la valeur à décroissance limitée étant représentative de la dernière valeur du second signal représentatif d'un courant de défaut à la terre moins la valeur de limitation de pente, et
- des moyens de détermination pour déterminer une nouvelle valeur du second signal représentatif d'un courant de défaut à la terre connectés aux moyens d'échantillonnage et aux moyens de calcul de décroissance.

Avantageusement, les moyens de détermination comportent des moyens de détection de maximum pour fournir une nouvelle valeur du second signal représentatif d'un courant de défaut à la terre, ledit second signal étant déterminé en fonction d'une valeur maximale du premier signal échantillonné ou de la valeur à décroissance limitée.

De préférence, les moyens de détermination comportent :
- des moyens de calcul de différence connectés aux moyens de mémorisation et aux moyens d'échantillonnage pour déterminer la différence entre une valeur du premier signal échantillonné et une dernière valeur du second signal,
- des moyens de comparaison pour comparer ladite différence avec la valeur de limitation de pente, et
- des moyens de sélection ayant des entrées connectées aux moyens d'échantillonnage et aux moyens de calcul de décroissance et étant contrôlés par les moyens de comparaison pour fournir en sortie un signal ayant une valeur à décroissance limitée si la différence entre une valeur du premier signal échantillonné et une dernière valeur du second signal est supérieure à la valeur de limitation de pente.

Dans un mode de réalisation particulier, la valeur de limitation de pente est constante.

Selon une première variante, la valeur de limitation de pente est variable en fonction d'une dernière valeur de crête du premier signal représentatif d'un courant de défaut à la terre.

Selon une seconde variante, la valeur de limitation de pente est variable en fonction d'un temps entre une dernière valeur de crête et une valeur instantanée postérieure du premier signal représentatif d'un courant de défaut à la terre.

Selon une troisième variante, la valeur de limitation de pente est variable en fonction d'une dernière valeur de crête et d'un temps entre une dernière valeur de crête et une valeur instantanée postérieure du premier signal représentatif d'un courant de défaut à la terre.

De préférence, un procédé de traitement pour le dispositif de protection terre comporte :
- une étape de lecture d'un signal d'entrée représentatif d'un courant de défaut terre,
- une étape de détermination d'une valeur limitée à la décroissance,
- une étape de sélection pour fournir un signal de sortie représentatif d'un courant de défaut terre, ledit signal de sortie étant à décroissance limitée si la différence entre le signal d'entrée et un signal de sortie précédant est supérieur à une valeur de limitation, et
- une étape de mémorisation du signal de sortie.

Avantageusement, le procédé comporte une étape de détection d'une valeur maximale entre le signal d'entrée et la valeur limitée à la décroissance

Un déclencheur électronique selon l'invention comporte un dispositif de protection terre tel que défini ci-dessus.

Un disjoncteur selon l'invention comporte un dispositif de protection terre tel que défini ci-dessus.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un disjoncteur comportant un dispositif de protection terre de l'art antérieur ;
- la figure 2 représente un schéma d'un dispositif de protection terre de l'art antérieur ;
- la figure 3 représente un schéma d'un dispositif de protection terre selon un mode de réalisation de l'invention ;
- les figures 4A et 4B montrent des signaux dans un dispositif de protection terre selon un mode de réalisation de l'invention ;
- la figure 5 représente un schéma d'un module de traitement d'un dispositif de protection terre selon un mode de réalisation de l'invention ;
- la figure 6 représente un organigramme pouvant fonctionner dans un module de traitement d'un dispositif de protection terre selon un mode de réalisation de l'invention ;
- la figure 7 représente un autre schéma d'un module de traitement d'un dispositif de protection terre selon un mode de réalisation de l'invention ;
- la figure 8 représente un autre organigramme pouvant fonctionner dans un module de traitement d'un dispositif de protection terre selon un mode de réalisation de l'invention ;
- la figure 9 représente un schéma d'un dispositif de modification de pente limitée pouvant fonctionner dans un module de traitement d'un dispositif de protection terre selon un mode de réalisation de l'invention ;
- les figures 10A à 10D montrent des signaux de différents types de limitation de pente de modules de traitement de dispositifs de protection terre selon des modes de réalisation de l'invention.

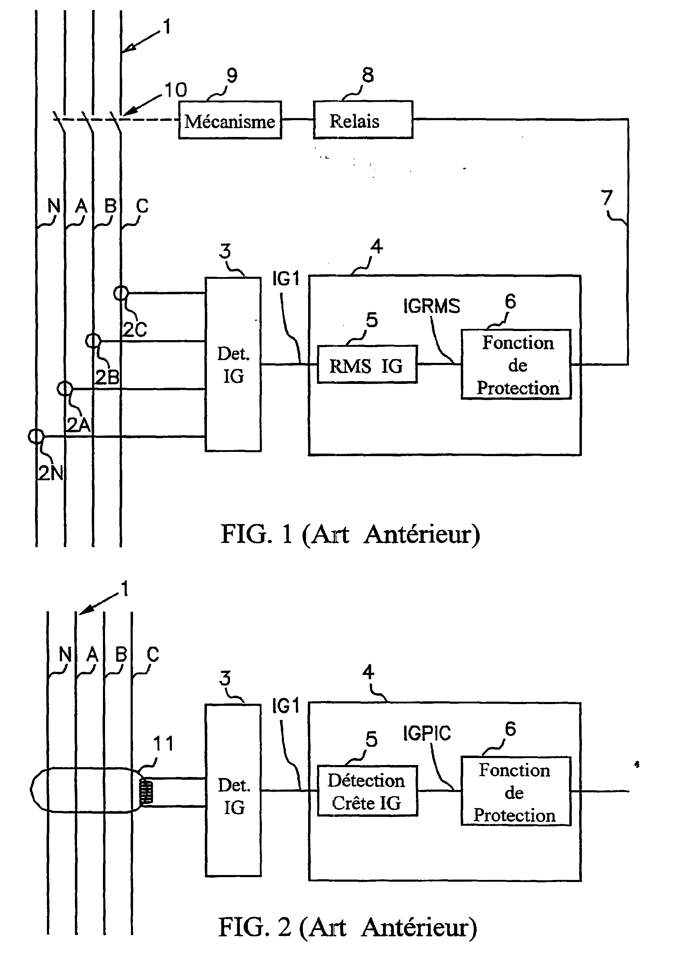

Le schéma de la figure 1 représente un disjoncteur comportant un dispositif de protection terre de l'art antérieur. Sur ce schéma, un réseau de distribution électrique 1 comporte des conducteurs de phase A, B, C et un conducteur de neutre N.

La mesure des courants de phases et de neutre est réalisée avec des transformateurs de courants disposés sur chaque conducteur respectivement 2A, 2B, 2C et 2N. Les transformateurs de courant fournissent des signaux de phase et de neutre à un circuit 3 de détection d'un courant homopolaire ou de protection terre IG1. Généralement le circuit 3 effectue une somme vectorielle pour déterminer le courant IG1 représentatif d'un courant de défaut terre.

Le signal IG1 est appliqué à une entrée d'un circuit de traitement 4 qui comporte un module 5 de prétraitement pour déterminer une valeur efficace IGRMS du signal IG1, et un module 6 de traitement de fonction de protection.

Le circuit de traitement fournit un signal de déclenchement 7 si le signal IG1 de défaut terre dépasse un seuil pendant une durée prédéterminée. Le signal 7 est fourni à un relais 8 pour commander l'ouverture de contacts 10 actionnés par un mécanisme 9. Les circuits 3 et 4 et le relais 8 forment un déclencheur électronique pour un disjoncteur.

Le schéma de la figure 2 montre un mode de réalisation différent. La valeur d'un courant de défaut terre est mesurée par un capteur de courant 11 qui entoure l'ensemble des conducteurs de phase et de neutre. Le signal fourni par le capteur 11 est appliqué à un circuit de détection 3 qui effectue, dans ce cas, notamment la mise en forme et le redressement du signal. Le circuit 3 fournit un signal IG1 représentatif d'un courant de défaut terre à un circuit de traitement 4.

Le circuit 4 de la figure 2 comporte un module de prétraitement 5 pour effectuer la détection crête du signal de protection terre et fournit un signal IGPIC au module 6 de traitement de fonction de protection.

Lorsque le courant de défaut terre est provoqué par un arc électrique, la durée dudit courant est courte et le module de prétraitement en valeur efficace ne permet pas de détecter correctement un tel défaut. Une détection directement en valeur efficace réduit la valeur du signal et n'est pas représentative des véritables nuisances que peut produire un signal d'arc. Si la détection était en valeur crête comme sur la figure 2, les courants d'arc seraient alors surestimés et la détection de courants sinusoïdaux comportant des harmoniques ne serait pas précise.

Dans un dispositif selon l'invention, la détection de courant de défaut sinusoïdaux comportant des harmoniques est précise notamment en valeur efficace et les courants comportant des impulsions de courtes durées tels que les courants représentatifs de défaut d'arc sont estimés à des valeurs supérieures à celles de leurs valeurs efficaces.

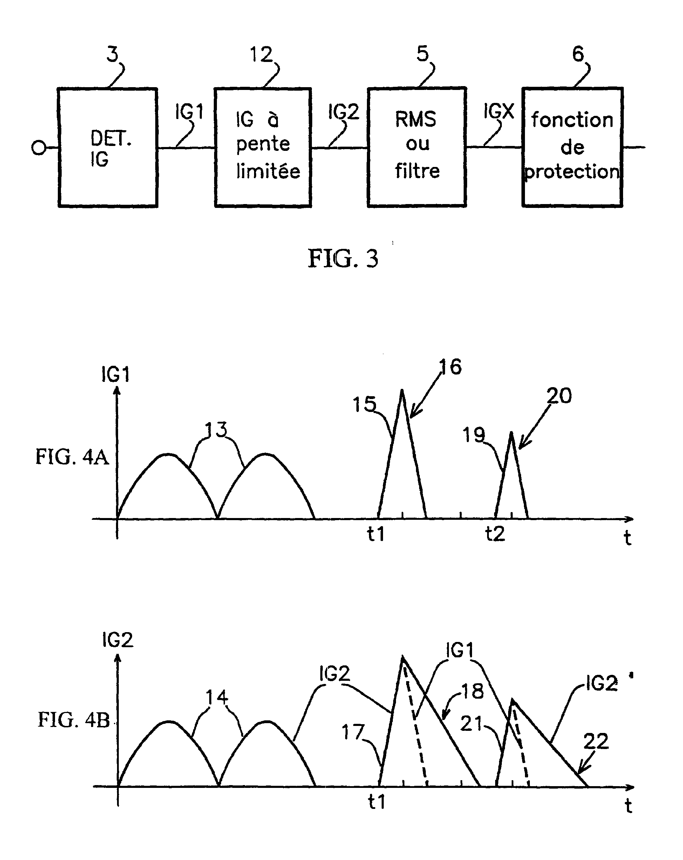

Dans un mode de réalisation de l'invention, représenté sur le schéma bloc de la figure 3, le dispositif de protection terre comporte un module de traitement 12 disposé entre le circuit de détection 3 et un module de prétraitement 5. Le module 12 reçoit le signal IG1 représentatif d'un signal de défaut terre et fournit un second signal IG2 représentatif d'un défaut terre ayant à la décroissance une pente limitée à une valeur prédéterminée.

De préférence, la pente limitée à la décroissance est supérieure à une pente à la décroissance d'une sinusoïde. Ainsi, le signal IG2 peut décroître plus rapidement qu'une sinusoïde pour préserver la forme des signaux sinusoïdaux.

Le module de prétraitement 5 détecte de préférence une valeur efficace IGX du second signal IG2. Dans ledit module 5, une valeur efficace approchée IGX peut aussi être obtenue par filtrage ou directement intégrée dans la fonction de protection du module 6.

La figure 4A montre un signal IG1 redressé représentatif d'un défaut terre et la figure 4B montre un signal IG2 fourni par le module 12.

Sur les figures 4A et 4B, deux premières alternances 13 du signal IG1 sont sinusoïdales. Si la pente limitée est supérieure à une pente sinusoïdale, le signal IG2 a sensiblement la même forme que le signal IG1. Ainsi, les deux premières alternances 14 du signal IG2 de la figure 4B ressemblent aux alternances 13.

A un instant tl, un premier signal 15 représentatif d'un arc apparaît. Ce signal a une amplitude élevée et une durée limitée. Dans ce cas, la pente à la décroissance, représentée par une partie 16 de la courbe, est très élevée. Le signal IG2 comporte alors à l'instant t1 un signal 17 correspondant au signal 15 du signal IG1. La partie croissante du signal 17 ressemble à la partie croissante du signal 15, mais une partie décroissante 18 a une pente décroissante limitée. Le signal 17 de IG2 représentatif d'un arc a une durée plus longue que celle du signal 15 et par conséquent la valeur efficace ou moyenne de IG2 est augmentée lorsque le signal IG1 est représentatif d'un signal d'arc.

A un instant t2, un second signal 19 représentatif d'un signal d'arc apparaît sur IG1. Ce signal aussi a une pente 20 à la décroissance très élevée. Il sera remplacé en sortie sur IG2 par un signal 21 ayant une pente 22 à la décroissance limitée.

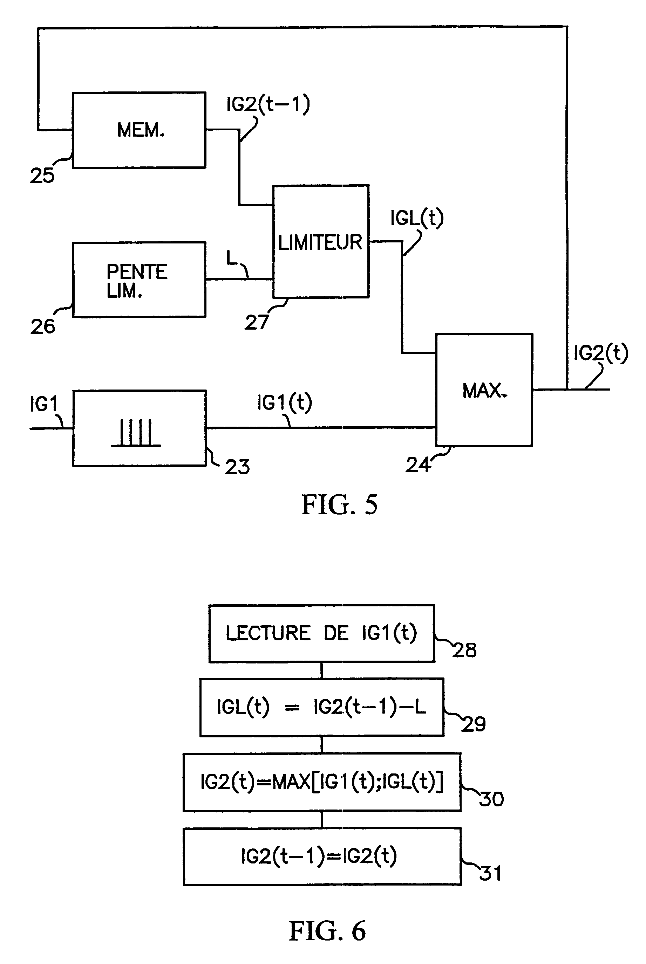

La figure 5 montre un mode de réalisation d'un module 12 pour un dispositif selon l'invention. Dans ce mode de réalisation, le signal IG1 représentatif d'un courant homopolaire est appliqué à l'entrée d'un circuit d'échantillonnage 23 qui fournit un signal échantillonné IG1(t) à une première entrée d'un détecteur de maximum 24. Le détecteur de maximum fournit un signal de sortie IG2(t) échantillonné.

Un circuit de mémorisation 25 reçoit et mémorise le signal IG2(t) et fournit en sortie un échantillon précédant IG2(t-1) du signal IG2(t).

Un module de paramétrage 26 fournit une valeur L de la pente de limitation à la décroissance. Un module de limitation 27, recevant en entrée un échantillon précédant IG2(t-1) du circuit de mémorisation 25 et une valeur L de la pente de module de paramétrage 26, détermine un échantillon IGL(t) ayant une valeur limitée à la décroissance et fournit ledit échantillon IGL(t) à une seconde entrée du détecteur de maximum 24. Le signal IGL(t) peut être déterminé selon la formule IGL(t) = IG2(t-1) - L.

Le détecteur de maximum 24 fournit le signal le plus élevé entre le signal IG1(t) d'entrée et le signal IGL(t) de valeur limitée à la décroissance. Ainsi, dès que le signal IG1(t) a une pente à la décroissance qui dépasse la pente limitée de valeur L, le détecteur 24 applique en sortie le signal IGL(t) à la place du signal IG1(t).
Le signal IG2(t) peut s'exprimer ainsi : IG2(t)=Max [IG1(t); IGL(t)].

La figure 6 montre un organigramme de fonctionnement d'un module 12. Dans cet organigramme, un échantillonnage du signal IG1(t) est réalisé à une étape de lecture 28. Une valeur IGL(t) limitée à la décroissance (IGL(t)=IG2(t-1)-L) est déterminée étape 29 de détermination. Puis, à une étape 30, la valeur maximale entre IG1(t) et IGL(t) est attribuée à IG2(t). A la fin du cycle, une étape 31 de mémorisation stocke la dernière valeur de IG2(t), ainsi IG2(t-1) est égal à IG2(t).

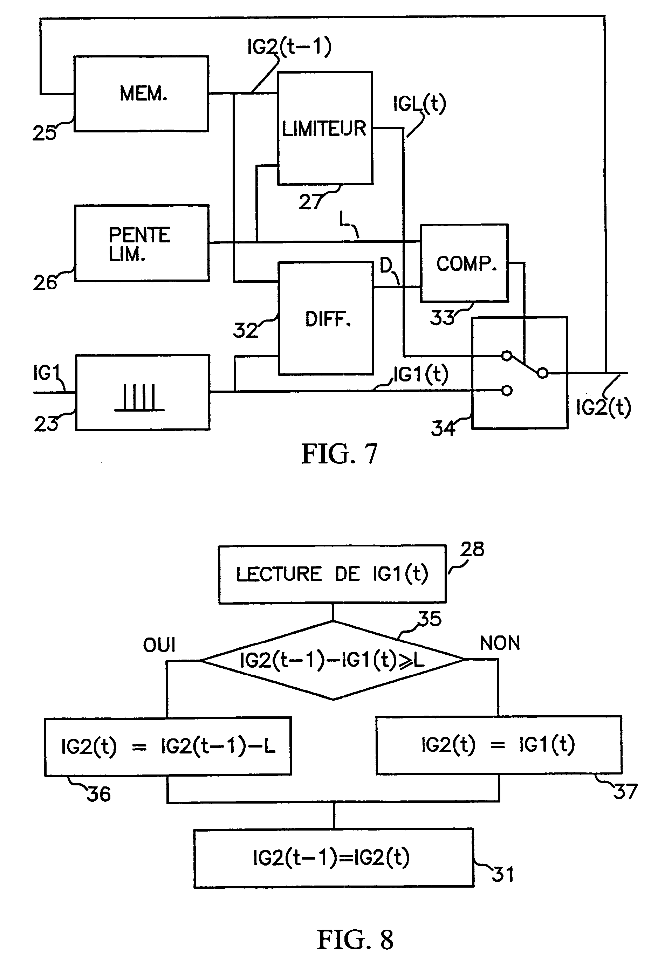

La figure 7 montre un autre mode de réalisation d'un module 12. Dans ce mode de réalisation, le module 12 comporte sensiblement les mêmes éléments que celui de la figure 5. Le détecteur de maximum 24 est remplacé par un module 32 pour déterminer une différence D entre le signal mémorisé IG2(t-1) et le signal échantillonné IG1(t) ; ainsi D = IG2(t-1) - IG1(t). Un comparateur 33 est prévu pour comparer la différence D et la valeur de limitation de pente L, et un sélecteur 34 commandé par le comparateur fournit le signal IG2(t) en sortie.

Le comparateur 33 reçoit les signaux IG1(t) de l'échantillonneur 23, le signal IGL(t) du module de limitation 27 commande le sélecteur 34 pour appliquer en sortie au signal IG2(t) la valeur IG1(t) si la différence D est inférieure à la limite L ou la valeur IGL(t) si la différence D est supérieure à la limite L .

La figure 8 montre un autre mode de réalisation d'un organigramme pouvant fonctionner dans un module 12. Cet organigramme comporte les étapes 28 de lecture et 31 de mémorisation comme celui de la figure 6. Après l'étape de lecture 28 du signal IG1 qui fournit un échantillon IG1(t), une étape de comparaison 35 compare la valeur de limitation de pente L et la différence D entre la valeur mémorisée IG2(t-1) et la valeur de l'échantillon IG1(t). Si la différence est supérieure ou égale à la valeur L, une étape 36 attribue au signal de sortie IG2(t) une valeur de limitation telle que IG2(t) est égal à IG2(t-1)-L. Si la différence est inférieure à la valeur L, une étape 37 attribue au signal de sortie IG2(t) la valeur du signal d'entrée IG1(t).

De préférence, la valeur L de limitation de pente est constante. Elle peut être prédéterminée de manière fixe ou dépendre de la dernière valeur de crête du signal IG1 de défaut terre.

Avantageusement, la valeur L de limitation de pente peut être variable en fonction du temps qui la sépare de la dernière crête du signal IG1 de défaut terre. Par exemple la pente peut être très faible près de la crête du signal et devenir élevée lorsque le temps augmente par rapport à la dernière crête. Dans un autre mode de réalisation, la valeur L de limitation de pente peut être variable en fonction de la valeur de la dernière crête et du temps qui sépare les échantillons de IG1(t) da la dernière crête dudit signal IG1(t).

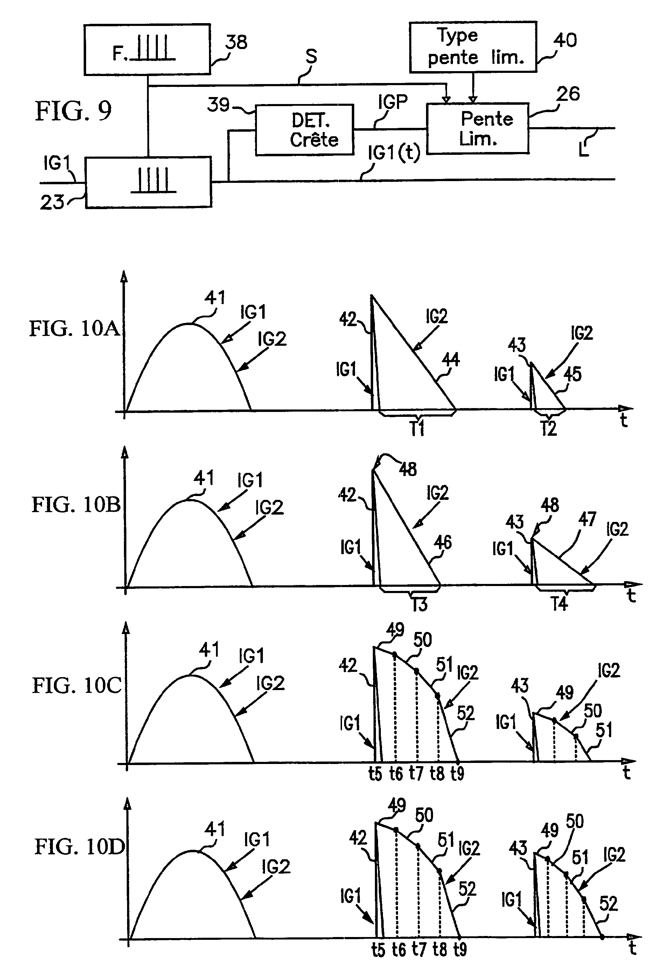

Le figure 9 montre un schéma d'un dispositif de modification de valeur de pente. Ce dispositif comporte un circuit de commande 38 d'échantillonnage pour commander l'échantillonneur 23 et fournir des informations d'échantillonnage S au module de paramétrage 26. Ce dispositif comporte aussi un détecteur de crête 39 recevant le signal IG1(t) et fournissant un signal IGP représentatif de la dernière crête au module 26. La sélection du type de pente peut être réalisée avec un module de sélection 40 connecté au module 26.

Les figures 10A et 10D illustrent des signaux correspondant à différents types de pentes de limitation à la décroissance. Sur chaque figure, il y a un premier signal sinusoïdal 41 pour lequel le signal IG2 est sensiblement équivalent au signal IG1, et un premier signal d'arc 42 de forte amplitude et un second signal d'arc 43 de faible amplitude pour lesquels le signal IG2 a une pente à la décroissance limitée inférieure à la décroissance du signal IG1.

Sur la figure 10A, la pente à décroissance limitée représentée par des signaux 44 et 45 est constante.

Sur la figure 10B, la pente à la décroissance est différente pour les signaux 42 et 43. Pour le signal 42, une pente 46 a une valeur élevée, et pour le signal 43, une pente 47 a une faible valeur. La pente peut avantageusement dépendre d'une dernière crête 48 du signal IG1. Un autre avantage du contrôle de la pente est la maîtrise de la durée de retour à zéro du signal IG2.

Par exemple, sur la figure 10A des durées T1 et T2 sont différentes avec des pentes 44 et 45 identiques alors que sur la figure 10B des durées T3 et T4 sont sensiblement équivalentes avec des pentes 46 et 47 différentes.

Sur la figure 10C, la pente à la décroissance est variable en fonction d'un temps entre la dernière crête et une valeur postérieure du signal IG2. Dans les exemples de la figure 10C, la pente a une première valeur dans une portion 49 entre des instants t5 et t6, une seconde valeur dans une portion 50 entre des instants t6 et t7, une troisième valeur dans une portion 51 entre des instants t7 et t8, et une quatrième valeur dans une portion 52 entre les instants t8 et t9. Les instants t5 à t9 peuvent être déterminés en fonction du nombre d'échantillons qui sépare un signal instantané de l'instant de la dernière crête 48.

Sur la figure 10D, la pente à la décroissance est variable en fonction d'un temps comme dans la figure 10C et en fonction aussi de la valeur de la dernière crête. Ainsi, les portions 49 à 52 peuvent être différentes à chaque signal.

Avantageusement, une pente à la décroissance selon la figure 10D peut simuler une courbe de type parabolique.

## Revendications

1. Dispositif de protection terre comportant une entrée pour recevoir un premier signal (IG1) représentatif d'un courant de défaut à la terre, des premiers moyens de traitement (5) de signal pour traiter un signal représentatif d'un courant de défaut à la terre, et des moyens de traitement (6) de fonctions de protection connectés aux premiers moyens (5) de traitement de signal,
dispositif **caractérisé en ce qu'**il comporte des seconds moyens (12) de traitement de signal pour traiter un signal (IG1) représentatif d'un courant de défaut à la terre connectés entre ladite entrée et les premiers moyens (5) de traitement de signal, lesdits seconds moyens de traitement de signal fournissant aux premiers moyens de traitement de signal un second signal (IG2) représentatif d'un courant de défaut à la terre ayant à la décroissance une pente (18, 22, 44-47, 49-52) inférieure à une valeur (L) de limitation de pente prédéterminée.

2. Dispositif de protection terre selon la revendication 1, **caractérisé en ce que** les seconds moyens de traitement de signal comportent :
- des moyens d'échantillonnage (23) pour échantillonner le premier signal représentatif d'un courant de défaut à la terre,
- des moyens de mémorisation (25) pour mémoriser une dernière valeur (IG2(t-1)) du second signal représentatif d'un courant de défaut à la terre,
- des moyens de calcul de décroissance (27) pour calculer une valeur (IGL(t)) à décroissance limitée connectés aux moyens de mémorisation et à des moyens (26) de fourniture d'une valeur (L) de limitation de pente, la valeur à décroissance limitée étant représentative de la dernière valeur (IG2(t-1)) du second signal représentatif d'un courant de défaut à la terre moins la valeur (L) de limitation de pente, et
- des moyens de détermination (24) pour déterminer une nouvelle valeur du second signal (IG2(t)) représentatif d'un courant de défaut à la terre connectés aux moyens (23) d'échantillonnage et aux moyens (27, 32,33,34) de calcul de décroissance.

3. Dispositif de protection terre selon la revendication 2, **caractérisé en ce que** les moyens de détermination comportent des moyens (24) de détection de maximum pour fournir une nouvelle valeur (IG2(t)) du second signal représentatif d'un courant de défaut à la terre, ledit second signal étant déterminé en fonction d'une valeur maximale du premier signal échantillonné (IG1(t)) ou de la valeur à décroissance limitée (IGL(t)).

4. Dispositif de protection terre selon l'une des revendications 2 ou 3, **caractérisé en ce que** les moyens de détermination comportent :
- des moyens (32) de calcul de différence (D) connectés aux moyens (25) de mémorisation et aux moyens (23) d'échantillonnage pour déterminer la différence entre une valeur (IG1(t)) du premier signal échantillonné et une dernière valeur (IG2(t-1)) du second signal,
- des moyens (33) de comparaison pour comparer ladite différence (D) avec la valeur (L) de limitation de pente, et
- des moyens (34) de sélection ayant des entrées connectées aux moyens (23) d'échantillonnage et aux moyens (27) de calcul de décroissance et étant contrôlés par les moyens (33) de comparaison pour fournir en sortie un signal ayant une valeur (IG2(t)) à décroissance limitée si la différence entre une valeur (IG1(t)) du premier signal échantillonné et une dernière valeur (IG2(t-1)) du second signal est supérieure à la valeur (L) de limitation de pente.

5. Dispositif de protection terre selon l'une quelconque des revendications 1 à 4, **caractérisé en ce que** la valeur (L) de limitation de pente est constante.

6. Dispositif de protection terre selon l'une quelconque des revendications 1 à 5, **caractérisé en ce que** la valeur (L) de limitation de pente est variable en fonction d'une dernière valeur (IGP) de crête du premier signal (IG1) représentatif d'un courant de défaut à la terre.

7. Dispositif de protection terre selon l'une quelconque des revendications 1 à 6, **caractérisé en ce que** la valeur (L) de limitation de pente est variable en fonction d'un temps (t6, t7, t8, t9) entre une dernière valeur de crête (48) et une valeur instantanée postérieure du premier signal représentatif d'un courant de défaut à la terre.

8. Dispositif de protection terre selon l'une quelconque des revendications 2 à 7, **caractérisé en ce que** la valeur (L) de limitation de pente est variable en fonction d'une dernière valeur de crête (IGP) et d'un temps (t6, t7, t8, t9) entre une dernière valeur de crête et une valeur instantanée postérieure du premier signal représentatif d'un courant de défaut à la terre.

9. Procédé de traitement pour un dispositif de protection terre selon l'une quelconque des revendications 2 à 8, **caractérisé en ce qu'**il comporte :
- une étape (28) de lecture d'un signal (IG1(t)) d'entrée représentatif d'un courant de défaut terre,
- une étape (29) de détermination d'une valeur (IGL(t)) limitée à la décroissance,
- une étape (30) de sélection pour fournir un signal de sortie (IG2(t)) représentatif d'un courant de défaut terre, ledit signal de sortie étant à décroissance limitée si la différence entre le signal d'entrée (IG1(t)) et un signal de sortie précédant (IG2(t-1)) est supérieur à une valeur (L) de limitation, et
- une étape (31) de mémorisation du signal de sortie,

10. Procédé selon la revendication 9, **caractérisé en ce qu'**il comporte une étape (30) de détection d'une valeur maximale (IG2(t)) entre le signal d'entrée (IG1(t)) et la valeur limitée à la décroissance (IGL(t)).

11. Déclencheur électronique comportant un dispositif de protection terre selon l'une quelconque des revendications 2 à 8.

12. Disjoncteur comportant un dispositif de protection terre selon l'une quelconque des revendications 2 à 8.

## Claims

1. Earth protection device comprising an input to receive a first signal (IG1) representative of an earth fault current, first signal processing means (5) to process a signal representative of an earth fault current, and processing means (6) of protection functions connected to the first signal processing means (5),
device **characterized in that** it comprises second signal processing means (12) to process a signal (IG1) representative of an earth fault current connected between said input and the first signal processing means (5), said second signal processing means supplying to the first signal processing means a second signal (IG2) representative of an earth fault current having on decrease a gradient (18, 22, 44-47, 49-52) lower than a preset gradient limiting value (L).

2. Earth protection device according to claim 1, **characterized in that** the second signal processing means comprise:
- sampling means (23) to sample the first signal representative of an earth fault current,
- storing means (25) to store a last value (IG2(t-1)) of the second signal representative of an earth fault current,
- decrease calculating means (27) to calculate a value (IGL(t)) with limited decrease connected to the storing means and to means (26) for supplying a gradient limiting value (L), the value with limited decrease being representative of the last value (IG2(t-1)) of the second signal representative of an earth fault current less the gradient limiting value (L), and
- determining means (24) for determining a new value of the second signal (IG2(t)) representative of an earth fault current connected to the sampling means (23) and to the decrease calculating means (27, 32, 33, 34).

3. Earth protection device according to claim 2, **characterized in that** the determining means comprise means (24) for detecting a maximum to supply a new value (IG2(t)) of the second signal representative of an earth fault current, said second signal being determined according to a maximum value of the first sampled signal (IG1(t)) or of the limited decrease value (IGL(t)).

4. Earth protection device according to one of claims 2 or 3, **characterized in that** the determining means comprise:
- means (32) for calculating a difference (D) connected to the storing means (25) and to the sampling means (23) to determine the difference between a value (IG1(t)) of the first sampled signal and a last value (IG2(t-1)) of the second signal,
- comparison means (33) to compare said difference (D) with the gradient limiting value (L), and
- selection means (34) having inputs connected to the sampling means (23) and to the decrease calculating means (27) and being controlled by the comparison means (33) to supply on output a signal having a limited decrease value (IG2(t)) if the difference between a value (IG1(t)) of the first sampled signal and a last value (IG2(t-1)) of the second signal is greater than the gradient limiting value (L).

5. Earth protection device according to any one of claims 1 to 4, **characterized in that** the gradient limiting value (L) is constant.

6. Earth protection device according to any one of claims 1 to 5, **characterized in that** the gradient limiting value (L) is variable according to a last peak value (IGP) of the first signal (IG1) representative of an earth fault current.

7. Earth protection device according to any one of claims 1 to 6, **characterized in that** the gradient limiting value (L) is variable according to a time (t6, t7, t8, t9) between a last peak value (48) and a subsequent instantaneous value of the first signal representative of an earth fault current.

8. Earth protection device according to any one of claims 2 to 7, **characterized in that** the gradient limiting value (L) is variable according to a last peak value (IGP) and to a time (t6, t7, t8, t9) between a last peak value and a subsequent instantaneous value of the first signal representative of an earth fault current.

9. Method for an earth protection device according to any one of claims 2 to 8, **characterized in that** it comprises:
- a read step (28) of an input signal (IG1(t)) representative of an earth fault current,
- a step (29) for determining a limited decrease value (IGL(t)),
- a selection step (30) to supply an output signal (IG2(t)) representative of an earth fault current, said output signal being with limited decrease if the difference between the input signal (IG1(t)) and a previous output signal (IG2(t-1)) is greater than a limiting value (L), and
- an output signal storing step (31).

10. Method according to claim 9, **characterized in that** it comprises a step (30) for detecting a maximum value (IG2(t)) between the input signal (IG1(t)) and the limited decrease value (IGL(t)).

11. Electronic trip device comprising an earth protection device according to any one of claims 2 to 8.

12. Circuit breaker comprising an earth protection device according to any one of claims 2 to 8.

## Patentansprüche

1. Erdschluss-Schutzeinrichtung mit einem Eingang zum Empfang eines ersten, einen Erdfehlerstrom abbildenden Signals (IG1), mit ersten Signalverarbeitungsmitteln (5) zur Verarbeitung eines einen Erdfehlerstrom abbildenden Signals sowie mit an die ersten Signalverarbeitungsmittel (5) angeschlossenen Schutzfunktions-Verarbeitungsmitteln (6), **dadurch gekennzeichnet, dass** die Einrichtung zwischen den genannten Eingang und die ersten Signalverarbeitungsmittel (5) geschaltete zweite Signalverarbeitungsmittel (12) zur Verarbeitung eines einen Erdfehlerstrom abbildenden Signals (IG1) umfasst, welche genannten zweiten Signalverarbeitungsmittel die ersten Signalverarbeitungsmittel mit einem zweiten, einen Erdfehlerstrom abbildenden Signal (IG2) beaufschlagen, dessen Abfallsteigung (18, 22, 44-47, 49-52) unter einem bestimmten Steigungsbegrenzungswert (L) liegt.

2. Erdschluss-Schutzeinrichtung nach Anspruch 1, **dadurch gekennzeichnet, dass** die zweiten Signalverarbeitungsmittel
- Abtastmittel (23) zur Abtastung des ersten, einen Erdfehlerstrom abbildenden Signals,
- Speichermittel (25) zur Speicherung eines letzten Werts (IG2(t-1)) des zweiten, einen Erdfehlerstrom abbildenden Signals,
- an die Speichermittel sowie an Mittel (26) zur Lieferung eines Steigungsbegrenzungswerts (L) angeschlossene Abfallberechnungsmittel (27) zur Berechnung eines Werts (IGL(t)) mit Abfallbegrenzung, wobei der Wert mit Abfallbegrenzung den letzten Wert (IG2(t-1)) des zweiten, einen Erdfehlerstrom abbildenden Signals, vermindert um den Steigungsbegrenzungswert (L) abbildet,
- sowie an die Abtastmittel (23) und die Abfallberechnungsmittel (27, 32, 33, 34) angeschlossene Bestimmungsmittel (24) zur Bestimmung eines neuen Werts des zweiten, einen Erdfehlerstrom abbildenden Signals (IG2(t)) umfasst.

3. Erdschluss-Schutzeinrichtung nach Anspruch 2, **dadurch gekennzeichnet, dass** die Bestimmungsmittel Maximalwert-Detektionsmittel (24) zur Lieferung eines neuen Werts (IG2(t)) des zweiten, einen Erdfehlerstrom abbildenden Signals umfassen, wobei das genannte zweite Signal in Abhängigkeit von einem Maximalwert des ersten Abtastsignals (IG 1 (t)) oder des Werts mit Abfallbegrenzung (IGL(t)) bestimmt wird.

4. Erdschluss-Schutzeinrichtung nach einem der Ansprüche 2 oder 3, **dadurch gekennzeichnet, dass** die Bestimmungsmittel
- an die Speichermittel (25) und die Abtastmittel (23) angeschlossene Berechnungsmittel (32) zur Berechnung der Differenz zwischen einem Wert (IG 1 (t)) des ersten Abtastwerts und einem letzten Wert (IG2(t-1)) des zweiten Signals,
- Vergleichsmittel (33) zum Vergleich der genannten Differenz (D) mit dem Steigungsbegrenzungswert (L)
- sowie Auswahlmittel (34) mit an die Abtastmittel (23) und an die Abfallberechnungsmittel (27) angeschlossenen Eingängen umfassen, welche Auswahlmittel von den Vergleichsmitteln (33) angesteuert werden, um an ihrem Ausgang ein Signal mit einem Abfallbegrenzungswert (IG2(t)) zu liefern, wenn die Differenz zwischen einem Wert (IG1(t) des ersten Abtastsignals und einem letzten Wert (IG2(t-1) des zweiten Signals größer ist als der Steigungsbegrenzungswert (L).

5. Erdschluss-Schutzeinrichtung nach irgendeinem der Ansprüche 1 bis 4, **dadurch gekennzeichnet, dass** der Steigungsbegrenzungswert (L) konstant ist.

6. Erdschluss-Schutzeinrichtung nach irgendeinem der Ansprüche 1 bis 5, **dadurch gekennzeichnet, dass** der Steigungsbegrenzungswert (L) in Abhängigkeit von einem letzten Scheitelwert (IGP) des ersten, einen Erdfehlerstrom abbildenden Signals (IG1) veränderbar ist.

7. Erdschluss-Schutzeinrichtung nach irgendeinem der Ansprüche 1 bis 6, **dadurch gekennzeichnet, dass** der Steigungsbegrenzungswert (L) in Abhängigkeit von einer Zeitspanne (t6, t7, t8, t9) zwischen einem letzten Scheitelwert (48) und einem nachfolgenden Augenblickswert des ersten, einen Erdfehlerstrom abbildenden Signals veränderbar ist.

8. Erdschluss-Schutzeinrichtung nach irgendeinem der Ansprüche 2 bis 7, **dadurch gekennzeichnet, dass** der Steigungsbegrenzungswert (L) in Abhängigkeit von einem letzten Scheitelwert (IGP) und einer Zeitspanne (t6, t7, t8, t9) zwischen einem letzten Scheitelwert und einem nachfolgenden Augenblickswert des ersten, einen Erdfehlerstrom abbildenden Signals veränderbar ist.

9. Signalverarbeitungsverfahren für eine Erdschluss-Schutzeinrichtung nach irgendeinem der Ansprüche 2 bis 8, **dadurch gekennzeichnet, dass** es
- einen Leseschritt (28) zum Einlesen eines, einen Erdfehlerstrom abbildenden Eingangssignals (IG1(t)),
- einen Bestimmungsschritt (29) zur Bestimmung eines Werts (IGL(t) mit Abfallbegrenzung,
- einen Auswahlschritt (30) zur Lieferung eines, einen Erdfehlerstrom abbildenden Ausgangssignals (IG2(t)), welches Ausgangssignal abfallbegrenzt ist, wenn die Differenz zwischen dem Eingangssignal (IG1(t)) und einem vorhergehenden Ausgangssignal (IG2(t-1)) größer ist als ein Begrenzungswert (L),
- sowie einen Speicherschritt (31) zur Speicherung des Ausgangssignals umfasst.

10. Verfahren nach Anspruch 9, **dadurch gekennzeichnet, dass** es einen Detektionsschritt (30) zur Erkennung eines Maximalwerts (IG2(t)) zwischen dem Eingangssignal (IG1 (t)) und dem Wert mit Abfallbegrenzung (IGL(t)) umfasst.

11. Elektronischer Auslöser mit einer Erdschluss-Schutzeinrichtung nach irgendeinem der Ansprüche 2 bis 8.

12. Leistungsschalter mit einer Erdschluss-Schutzeinrichtung nach irgendeinem der Ansprüche 2 bis 8.
